# EUROPÄISCHE PATENTSCHRIFT

(11) **EP 3 071 460 B1**
(45) Veröffentlichungstag und Bekanntmachung des Hinweises auf die Patenterteilung: **04.10.2017**
(21) Anmeldenummer: 14796709.5
(22) Anmeldetag: 07.11.2014
(51) Int. Cl.: B60W 30/06, B62D 15/02, G08G 1/16, B60W 30/095, B60W 10/04, B60W 10/18, B60W 10/20, B60Q 9/00, B60R 1/00

(54) **VERFAHREN ZUM BETRIEB EINES ZUR VOLLSTÄNDIG AUTOMATISIERTEN FÜHRUNG EINES KRAFTFAHRZEUGS AUSGEBILDETEN FAHRZEUGSYSTEMS UND KRAFTFAHRZEUG**
METHOD FOR OPERATING A VEHICLE SYSTEM AND A VEHICLE ABLE TO FULL AUTOMATED GUIDANCE
PROCÉDÉ POUR FAIRE FONCTIONNER UN SYSTÈME ET UN VÉHICULE CAPABLES D'UNE CONDUITE ENTIÈREMENT AUTOMATISÉ

(30) Priorität: 19.11.2013 DE 102013019374
(43) Veröffentlichungstag der Anmeldung: 28.09.2016
(73) Patentinhaber: Audi AG, 85045 Ingolstadt (DE)
(72) Erfinder: POPKEN, Markus, 85080 Gaimersheim (DE); BOUSQUET, Laure, 85080 Gaimersheim (DE); KIENAST, Henning, 60316 Frankfurt am Main (DE)
(74) Vertreter: Herbst, Matthias Heinz
(86) Internationale Anmeldenummer: PCT/EP2014/002983
(87) Internationale Veröffentlichungsnummer: WO 2015/074743

(56) Entgegenhaltungen:
- EP-A1- 2 060 465
- EP-A1- 2 273 471
- EP-A2- 1 398 684
- DE-A1-102008 062 796
- DE-A1-102010 051 206
- DE-A1-102011 086 215
- DE-A1-102012 007 984

## Beschreibung

Die Erfindung betrifft ein Verfahren zum Betrieb eines zur vollständig automatisierten Führung eines Kraftfahrzeugs ausgebildeten Fahrzeugsystems, welches unter der Aufsicht eines Fahrers die Längsführung und die Querführung des Kraftfahrzeugs entlang einer Zieltrajektorie, welche aufgrund von zu einem Umfeldmodell ausgewerteten Sensordaten wenigstens eines Umfeldsensors ermittelt wird, vollständig übernimmt. Daneben betrifft die Erfindung ein Kraftfahrzeug.

Viele Forschungsprojekte befassen sich mit der vollständig automatisierten Fahrzeugführung, das bedeutet, Fahrzeugsystemen, die die Längs- und Querführung des Kraftfahrzeugs vollständig übernehmen, ohne dass diesbezüglich Vorgaben und Bedienhandlungen des Fahrers notwendig sind. Solche Fahrzeugsysteme werden häufig auch als vollautomatische Fahrerassistenzsysteme bezeichnet. In engen Einsatzbereichen sind derartige Fahrzeugsysteme bereits serienmäßig verfügbar, beispielsweise im Fall eines Einparkassistenten.

Zur Unterstützung des Fahrers sind auch andere Fahrerassistenzsysteme bereits bekannt, beispielsweise ebenso im Fall des Einparkens oder Rangierens eingesetzte Fahrerassistenzsysteme, die mit einer Rückfahrkamera ein Videobild aufnehmen und dies an einer Anzeigevorrichtung im Kraftfahrzeug darstellen. Eine derartige Umfelddarstellung unterstützt den Fahrer beim Rangieren.

Die erwähnten bereits zur Serienproduktion vorgesehenen, zur vollständig automatisierten Führung eines Kraftfahrzeugs ausgebildeten Fahrzeugsysteme setzen voraus, dass die Verantwortung für den Betrieb des Kraftfahrzeugs weiterhin beim Fahrer verbleibt, der mithin die vollständig automatisierte Fahrzeugführung durch das Fahrzeugsystem zu überwachen und zu beaufsichtigen hat. Dem Fahrer obliegt mithin die Aufgabe, das gewollte Manöver, beispielsweise einen Einparkvorgang zu initiieren und zu überwachen.

Aus der DE 10 2010 051 206 A1 ist ein Verfahren zum Erzeugen eines Bilds einer Fahrzeugumgebung eines Fahrzeugs mit mindestens einer Kamera durch Aufnehmen eines ersten Teilbilds in einer ersten Position oder Ausrichtung der Kamera und Aufnehmen mindestens eines zweiten Teilbilds in mindestens einer zweiten Position oder Ausrichtung der Kamera bekannt, wobei jedes Teilbild dem gesamten Erfassungsbereich der Kamera entspricht und das erste Teilbild sowie das zweite Teilbild zu dem Bild der Fahrzeugumgebung so zusammengesetzt werden, dass das Bild einen größeren Bereich zeigt als jedes Teilbild. Dabei wird während der Darstellung des Bilds ein Einparkvorgang des Fahrzeugs halbautomatisch oder vollautomatisch durchgeführt, wobei die Umgebung des Fahrzeugs mittels geeigneter Sensorik abgetastet und ein Bild der Umgebung in einer Umgebungskarte gespeichert wird. Diese Informationen werden weiterverarbeitet, so dass einzelne Hindernisse erkannt und klassifiziert werden können. Dabei werden die erkannten Hindernisse direkt nebst einer vorhergesagten beziehungsweise geplanten Trajektorie eines halbautomatischen Parkvorgangs des Fahrzeugs eingeblendet.

Daneben beschreibt die DE 10 2011 086 215 A1 ein Verfahren zur Unterstützung eines Fahrers eines Kraftfahrzeugs bei einem Fahrmanöver, wobei in einem ersten Schritt die Umgebung des Kraftfahrzeugs erfasst wird und eine zweidimensionale Darstellung der Umgebung des Kraftfahrzeugs angezeigt wird, in einem zweiten Schritt eine gewünschte Endposition des Kraftfahrzeugs durch den Fahrer eingegeben wird, wobei die Endposition in der zweidimensionalen Darstellung markiert wird, und in einem abschließenden Schritt eine Trajektorie zum Erreichen der Endposition bestimmt wird und ein automatisches Fahrmanöver durchgeführt wird, bei dem das Kraftfahrzeug entlang der Trajektorie in die Endposition manövriert wird. Dabei wird aus der erfassten Umgebung des Kraftfahrzeugs ein räumliches Bild der Umgebung erzeugt, wodurch Objekte, die kein Hindernis darstellen oder Objekte, die Hindernisse darstellen, markiert werden.

Problematisch hierbei ist jedoch, dass die internen Entscheidungsgrundlagen, die zu bestimmten Fahreingriffen führen, nicht bekannt sind, so dass es schwer fällt, zu beurteilen, wann ein fahrerseitiges Einschreiten erforderlich ist. Nähert sich beispielsweise das Kraftfahrzeug einem Hindernis, so ist es dem Fahrer nicht bekannt, ob das zur vollständig automatischen Führung des Kraftfahrzeugs ausgebildete Fahrzeugsystem dieses als solches erkannt hat und die Zieltrajektorie mithin ein rechtzeitiges Bremsen beinhaltet oder nicht. Daher kann es zu einer zu späten Reaktion des Fahrers kommen.

Der Erfindung liegt daher die Aufgabe zugrunde, den Betrieb eines derartigen Fahrzeugsystems so zu steuern, das die Aufsichtstätigkeit des Fahrers erleichtert und ein rechtzeitiges Eingreifen ermöglicht wird.

Zur Lösung dieser Aufgabe ist erfindungsgemäß ein Verfahren mit den Merkmalen des Patentanspruchs 1 vorgesehen.

Erfindungsgemäß wurde erkannt, dass dem Fahrer mehr Informationen über das (bisher implizite) Wissen des Fahrzeugsystems zur Verfügung gestellt werden sollten. Das Fahrzeugsystem agiert auf diese Weise transparent und gibt dem Fahrer die Möglichkeit, anhand der Fahrzeugführungsinformation früher abzuschätzen, ob eine Fehleinschätzung des Fahrzeugsystems vorliegt, und entsprechend einzugreifen. Bezüglich dem Verlauf der Zieltrajektorie erhält der Fahrer die Information, welcher Pfad abgefahren werden soll, so dass er frühzeitig gegengeprüft werden kann. Es existiert eine Vorausschau, die deutlich größer als die menschlichen Reaktionszeiten ist, so dass ein rechtzeitiges Eingreifen möglich ist, wenn beispielsweise die Zieltrajektorie offensichtlich über ein nicht erkanntes Hindernis führt und dergleichen. Auch kann ein menschlicher Fahrer besser einschätzen, wie sich andere Verkehrsteilnehmer, beispielsweise Fußgänger verhalten, die die Zieltrajektorie kreuzen könnten, so dass auch in solchen Fällen eine gezieltere Überwachung des Betriebs des das Kraftfahrzeug führenden Fahrzeugsystems ermöglicht wird.

Im Hinblick auf die Befahrbarkeitsbewertung wird dem Fahrer beispielsweise mitgeteilt, welche Flächen als "frei" und somit befahrbar erkannt werden. Wurde dort ein Hindernis übersehen, ist dies für den Fahrer leicht ersichtlich und er kann entsprechend korrigierend eingreifen. Jedoch ist auch die Information darüber, wo die Befahrbarkeit nicht gegeben ist, beispielsweise also Hindernisse erkannt wurden, durchaus nützlich, denn möglicherweise ist ein Hindernis überfahrbar (Grasbüschel, Rauchschwade, und dergleichen) und ein besserer Fahrweg bietet sich an.

Einem solchermaßen transparent agierenden Fahrzeugsystem kann der Fahrer auch insbesondere mehr Freiheiten gestatten, beispielsweise eine höhere Fahrgeschwindigkeit, einen stärkeren Lenkeinschlag und dergleichen. Es ergibt sich in jedem Fall eine verbesserte Überwachung, was die Leistungsfähigkeit und Bedienbarkeit/Kontrollierbarkeit des Fahrzeugsystems erhöht und es wird somit leichter ermöglicht, neue Fahrzeugsysteme in Verkehr zu bringen.

Dabei können verschiedene Anzeigevorrichtungen verwendet werden, um die Darstellung letztlich dem Fahrer zur Kenntnis zu bringen, wobei es in einer ersten Erfindungsalternative möglich ist, dass die Darstellung kontaktanalog auf einem Head-Up-Display angezeigt wird. Ein derartiges Head-Up-Display muss sich nicht auf die Frontscheibe des Kraftfahrzeugs beschränken, sondern es sind durchaus Head-Up-Displays auch für andere Scheiben des Kraftfahrzeugs, beispielsweise eine Heckscheibe, denkbar und möglich, wenn das zur vollständig automatisierten Führung des Kraftfahrzeugs ausgebildete Fahrzeugsystem für Rangiervorgänge, beispielsweise einen Einparkvorgang, ausgelegt ist. In einem solchen Fall muss der Fahrer allerdings verschiedene Seiten des Kraftfahrzeugs im Auge behalten, ohne dass unmittelbar klar ist, wo relevante Vorgänge vorliegen. Mithin ist diese Ausführungsform der vorliegenden Erfindung weniger bevorzugt.

Eine demgegenüber bevorzugte alternative Ausgestaltung sieht vor, dass die Darstellung ein Kamerabild wenigstens eines Teils des Umfelds des Kraftfahrzeugs umfasst, dem die Fahrzeugführungsinformation passgenau überlagert ist. Eine derartige Darstellung kann auf einer sonstigen Anzeigevorrichtung des Kraftfahrzeugs dargestellt werden, beispielsweise einem Bildschirm einer Mensch-Maschine-Schnittstelle und dergleichen. Dabei wird mithin ein Kamerabild, das von einer auf das Umfeld des Kraftfahrzeugs gerichteten Kamera aufgenommen wurde, als Grundlage verwendet und die Fahrzeugführungsinformation passgenau überlagert. Das bedeutet, die Überlagerung erfolgt ähnlich wie bei der bereits erwähnten Kontaktanalogie derart, dass eine einem Umgebungsmerkmal zugeordnete Teilinformation der Fahrzeugführungsinformation diesem Umgebungsmerkmal zugeordnet, insbesondere dieses überlagernd, dargestellt wird. Die Verwendung eines Kamerabilds bietet die später noch genauer zu diskutierende Möglichkeit, die Ansicht der Umgebung des Kraftfahrzeugs der aktuellen Situation anzupassen und es mithin dem Fahrer durch Blick auf eine einzige Anzeigevorrichtung zu ermöglichen, alle relevanten Informationen zu erfassen.

So kann in einer besonders bevorzugten Ausgestaltung der vorliegenden Erfindung vorgesehen sein, dass der durch das Kamerabild dargestellte Teil des Umfelds in Abhängigkeit von der Fahrsituation, insbesondere abhängig von dem Verlauf der Zieltrajektorie, zeitaktuell gewählt wird. Insbesondere wird also das Kamerabild unter mehreren von unterschiedlichen Kameras aufgenommenen Kamerabildern und/oder als Teil eines Kamerabildes derart ausgewählt, dass es den größtmöglichen Teil eines als nächstes abzufahrenden Anteils der Zieltrajektorie anzeigt. Die entstehenden Kamerasichten können mithin automatisch umgeschaltet werden, um dem Fahrer immer die optimale Sicht auf das Geschehen zu bieten, basierend auf dem Wissen über die Szene. Als Kameras, die die Kamerabilder liefern, können im Übrigen beispielsweise an allen Seiten des Kraftfahrzeugs vorgesehene, auf das Umfeld gerichtete Weitwinkel-Kameras eingesetzt werden, wobei es dann durchaus auch denkbar ist, lediglich Ausschnitte von Kamerabildern auszuwählen und als Grundlage der Darstellung zu verwenden.

Dabei ist es bei der Einblendung in ein Kamerabild grundsätzlich möglich, den Boden als eine ebene Fläche anzunehmen und die Fahrzeugführungsinformationen in dieser Ebene erscheinen zu lassen. Bevorzugt ist es jedoch, wenn die Fahrzeugführungsinformationen so dargestellt werden, als wären sie auf den Boden des Umfelds projiziert. Hierzu kann insbesondere vorgesehen sein, dass die Lage des Bodens unter Verwendung von Sensordaten wenigstens eines Umfeldsensors und/oder aus dem Umfeldmodell und/oder aus dem oder wenigstens einem Kamerabild ermittelt wird. Wird also der Boden genauer abgetastet und liegen mithin genauere Informationen über den Boden vor, lassen sich die Fahrzeugführungsinformationen präzise auf den Boden "projizieren", so dass eine äußerst präzise Ortszuordnung der Fahrzeugführungsinformation für den Fahrer möglich ist. Mit Methoden der Bildverarbeitung ist es unter Kenntnis der Lage des Bodens problemlos möglich, Fahrzeugführungsinformationen so erscheinen zu lassen, als wären sie an der korrekten Stelle auf dem Boden aufgebracht. Dabei ist es selbstverständlich so, dass die Fahrzeugführungsinformationen fest mit dem Boden verbunden scheinen, mithin bei einer Bewegung des Kraftfahrzeugs scheinbar ortsfest verbleiben und sich nicht mit dem Kraftfahrzeug "mitschieben", beispielsweise beim Anfahren.

In Weiterbildung des erfindungsgemäßen Verfahrens kann vorgesehen sein, dass eine eine Bewertung beschreibende Fahrzeugführungsinformation durch farbige Überlagerung oder Einfärbung des Umfeldbereichs in Abhängigkeit von der Bewertung angezeigt wird. Beispielsweise kann dabei vorgesehen sein, dass befahrbare Umfeldbereiche in grün und/oder nicht befahrbare Umfeldbereiche in rot markiert werden, wobei es gerade in einer derartigen Ausgestaltung allgemein zweckmäßig ist, wenn die Fahrzeugführungsinformation als scheinbar mit dem Boden (im erweiterten Sinne im Übrigen auch erhöhten Objekten) verbunden erscheint. Selbstverständlich sind auch andere Möglichkeiten denkbar, die auf die Befahrbarkeitsbewertung bezogenen Fahrzeugführungsinformationen einzublenden, so dass freie Flächen neben einer Markierung in grün auch anderweitig hell und/oder transparent angezeigt werden können. Nicht als befahrbar erkannte Bereiche, beispielsweise Hindernisse, können in Rot deutlich hervorgehoben werden oder aber auch dunkel markiert werden. Beispielsweise sind also auch Ausgestaltungen denkbar, in denen als befahrbar erkannter Untergrund weiß schraffiert, als nicht befahrbar erkannte Umfeldbereiche jedoch schwarz schraffiert erscheinen können. Die Einteilung kann dabei im Übrigen auch gemäß des Umfeldmodells erfolgen, das bedeutet, wenn das Umfeldmodell selbst das Umfeld des Kraftfahrzeugs beispielsweise gitterartig in Unterbereiche aufteilt, denen dann ein Attribut "frei" oder "belegt", gegebenenfalls auch "unbekannt" zugeordnet ist, kann der Boden des Umfelds beispielsweise als durch eine Art "Schachbrettmuster" überlagert erscheinen. Ersichtlich sind verschiedenste Ausgestaltungen denkbar.

Ferner sieht eine bevorzugte Weiterbildung vor, dass eine den Verlauf der Zieltrajektorie beschreibende Fahrzeugführungsinformation als wenigstens ein Pfeil und/oder ein die Breite des Kraftfahrzeugs aufweisender Fahrschlauch und/oder in regelmäßigen Abständen aufeinanderfolgende wenigstens teilweise transparente Abbilder des Kraftfahrzeugs und/oder wenigstens eine Linie angezeigt wird. Der in der Zukunft zu fahrende Pfad, also die Zieltrajektorie, kann mithin durch einfache Strecken, Fahrzeugbreite "Teppiche", halbtransparente Fahrzeuge in regelmäßigen Abständen und dergleichen dargestellt werden, so dass auch hier eine Vielzahl von Möglichkeiten besteht.

Es ist ferner erfindungsgemäß vorgesehen, dass dem Verlauf der Zieltrajektorie ein Geschwindigkeitsprofil zugeordnet ist, welches ebenso als Fahrzeugführungsinformation angezeigt wird, insbesondere durch eine Modifikation eines den Verlauf der Zieltrajektorie betreffenden Darstellungselements. Bei Fahrzeugsystemen, die auch die Längsführung des Kraftfahrzeugs regeln, weisen Zieltrajektorien häufig ein Geschwindigkeitsprofil zu, das im Sinne der Transparenz des Betriebs des Fahrzeugsystems ebenso dem die Aufsicht innehabenden Fahrer als Fahrzeugführungsinformation ermittelt werden kann. Hierzu ist es beispielsweise denkbar, die Länge von Pfeilen anhand der Geschwindigkeit anzupassen, die Dicke von Linien, die Abstände aufeinanderfolgender wenigstens teilweise transparenter Abbilder des Kraftfahrzeugs je nach der Geschwindigkeit anzupassen und dergleichen. Auf diese Weise ist eine intuitive Vermittlung auch der Geschwindigkeitsinformation möglich.

Vorzugsweise wird ein in dem Verlauf der Zieltrajektorie enthaltener Fahrtrichtungswechsel als Fahrzeugführungsinformation in Form eines Balkens und/oder einer virtuellen Wand angezeigt. Gerade bei Rangiervorgängen, insbesondere Einparkvorgängen, die durch ein derartiges Fahrzeugsystem gesteuert werden können, kommt es häufig zu Fahrtrichtungswechseln, die dem Fahrer ebenso über eine eingängige Symbolik in der Darstellung vermittelt werden können, bevorzugt als Balken oder virtuelle Wände, von denen die Fortsetzung der Zieltrajektorie entsprechend weiterführt. Diese Richtungswechsel geben dem Fahrer auch die Information mit, dass dort ein kurzzeitiger Halt des Kraftfahrzeugs eingeplant ist.

Dabei sei an dieser Stelle noch angemerkt, dass Umfeldmodelle, in denen Sensordaten von Umfeldsensoren verschiedener Art sowie gegebenenfalls weitere Daten fusioniert werden können, im Stand der Technik bereits weitgehend bekannt sind. Dabei sind unterschiedliche Arten von Umfeldmodellen bekannt, beispielsweise solche, die das Umfeld des Kraftfahrzeugs, wie bereits erwähnt wurde, in ein gleichmäßiges Raster bzw. Gitter einteilen und jedem Gitterelement Attribute zuordnen. Auch objektbasierte Umfeldmodelle sind bekannt, in denen einzelne Umfeldobjekte mit ihren entsprechenden Eigenschaften abgespeichert sind. Alle diese Umfeldmodelle lassen sich entsprechend auch im Rahmen der vorliegenden Erfindung einsetzen.

Dabei sind bereits Umfeldmodelle bekannt, die eine konkrete Bewertung der Befahrbarkeit bestimmter Bereiche enthalten, es ist jedoch auch möglich, dass die Bewertung im Hinblick auf die Befahrbarkeit im Rahmen des erfindungsgemäßen Verfahren zusätzlich durchgeführt wird. Unabhängig davon, in welchem Kontext dies geschieht, sieht eine vorteilhafte Ausführungsform der Erfindung vor, dass bei der Ermittlung der eine Bewertung wenigstens eines im Umfeldmodell abgedeckten Umfeldbereichs im Hinblick auf dessen Befahrbarkeit beschreibenden Fahrzeugführungsinformation eine Einhüllungsfläche des Kraftfahrzeugs berücksichtigt wird. Es wird eine äußere Begrenzung, mithin Ausdehnung, des Kraftfahrzeugs angenommen, anhand derer beurteilt werden kann, ob das Kraftfahrzeug unter Betrachtung eines zentralen Punktes als die Position definierend dorthin fahren kann.

Dabei ist es besonders bevorzugt, wenn die Einhüllungsfläche in Abhängigkeit eines erfassten Hindernisses angepasst wird, insbesondere bei einem die Außenspiegel gefährdenden Hindernis eine die Außenspiegel berücksichtigende Einhüllungsfläche und bei einem die Außenspiegel nicht gefährdenden Hindernisse eine die Außenspiegel nicht berücksichtigende Einhüllungsfläche verwendet wird. Dabei kann eine Unterscheidung beispielsweise über die Höhe des entsprechenden Hindernisses bzw. durch Überprüfung, ob sich das Hindernis auf Höhe der Außenspiegel befindet, erfolgen, wobei die entsprechenden Höheninformationen dem Umfeldmodell entnommen werden können. So wird also je nach erkanntem Hindernis die Einhüllungsfläche angepasst: Taucht ein Hindernis auf, welches mit dem Außenspiegel kollidieren könnte, wird die Einhüllungsfläche über die Außenspiegel gezogen, sind jedoch nur niedrige Hindernisse vorhanden, wird die Einhüllungsfläche ohne die Außenspiegel betrachtet.

Neben dem Verfahren betrifft die Erfindung auch ein Kraftfahrzeug mit einer Anzeigevorrichtung und einem zur vollständig automatisierten Führung des Kraftfahrzeugs ausgebildeten Fahrzeugsystem, aufweisend ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, mit welchem mithin dieselben Vorteile erhalten werden können.

Dabei umfasst das Kraftfahrzeug üblicherweise auch Umfeldsensoren, insbesondere auch Kameras, die ein der Darstellung zugrunde liegendes Kamerabild liefern können. Ferner ist eine Anzeigevorrichtung zur Wiedergabe der Darstellung vorgesehen. Die Erstellung des Umfeldmodells kann in dem Steuergerät des Fahrzeugsystem und/oder in einem anderen Steuergerät erfolgen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine mögliche Darstellung bei einem Einparkmanöver, und
- Fig. 2: ein erfindungsgemäßes Kraftfahrzeug.

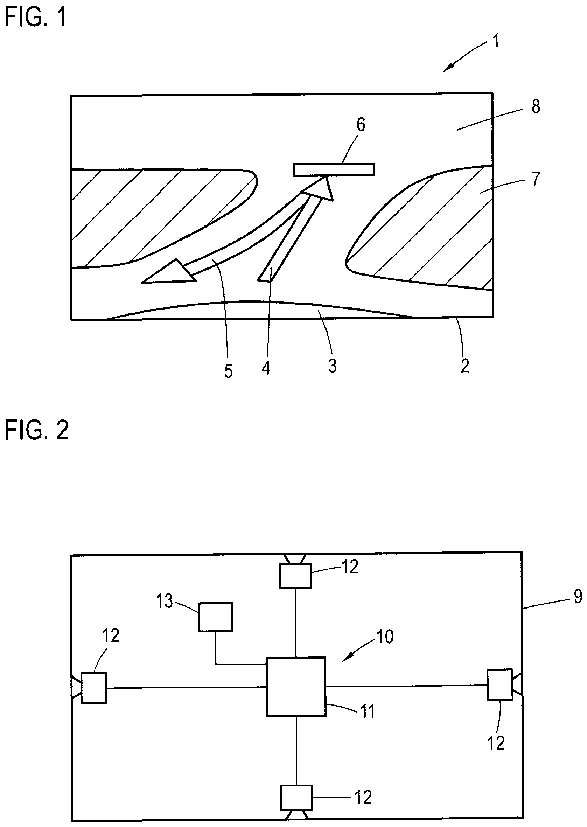

Im Folgenden soll ein Ausführungsbeispiel des erfindungsgemäßen Verfahrens erläutert werden, wie es auf ein Einparksystem als zur vollständig automatischen Führung des Kraftfahrzeugs ausgebildetes Fahrzeugsystem anwendbar ist. Als Grundlage einer im erfindungsgemäßen Verfahren zu erzeugenden Darstellung 1, vgl. Fig. 1, dient ein mit einer auf das Umfeld des Kraftfahrzeugs gerichteten Kamera aufgenommenes Kamerabild 2, dessen Details vorliegend der einfacheren Darstellung halber nicht gezeigt sind, sondern lediglich die stattfindende Überlagerung durch Fahrzeugführungsinformationen. Die Fahrzeugführungsinformation betrifft dabei vorliegend sowohl die Zieltrajektorie, die das Fahrzeugsystem abzufahren plant, als auch die aus einem Umfeldmodell abgeleitete Bewertung von dort abgedeckten Umfeldbereichen im Hinblick auf die Befahrbarkeit. Dabei wird im Übrigen das Kamerabild abhängig von der aktuellen Fahrsituation so gewählt, dass es den größtmöglichen Anteil der als nächstes abzufahrenden Zieltrajektorie zu zeigen vermag, wobei beispielsweise eine Auswahl aus Kamerabildern mehrerer Kameras besteht und/oder auch nur Ausschnitte eines größeren Kamerabildes verwendet werden können.

Das gemäß Fig. 1 verwendete Kamerabild 2 zeigt den Rückraum des Kraftfahrzeugs, so dass beispielsweise auch der Stoßfänger 3 des Kraftfahrzeugs dort sichtbar ist. Auf bestimmte Orte im Umfeld des Kraftfahrzeugs bezogene Fahrzeuginformation sind passgenau derart überlagert, dass es so wirkt, als wären sie auf dem Boden projiziert.

Zur Darstellung der Zieltrajektorie werden vorliegend Teile 4, 5 verwendet. Ein zudem eingeblendeter Balken 6 zeigt einen Wendepunkt an, an dem das Kraftfahrzeugs die Fahrtrichtung wechselt. Im Hinblick auf die Befahrbarkeitsbewertung werden nicht befahrbare Umfeldbereiche 7 durch eine transparente rote Markierung überlagert, als frei befahrbar erkannte Umfeldbereiche 8 werden lediglich in einem hellen Grün sanft überblendet.

Aus einer derartigen Darstellung 1 kann der Fahrer also leicht ersehen, welches die weiteren Fahrzeugführungsmaßnahmen des Fahrzeugsystems sind und auf welchen Annahmen diese basieren. Liegt eine Fehleinschätzung vor, wurde also beispielsweise ein Hindernis übersehen oder fehlerhaft als solches erkannt, oder ergibt die detailliertere Beurteilung der Verkehrssituation durch den Fahrer, beispielsweise durch Beobachtung eines Fußgängers, eine Notwendigkeit zum Eingriff, kann dieser frühzeitig erfolgen.

Es ist daneben vorgesehen, eine Geschwindigkeitsinformation aus einem der Zieltrajektorie zugeordneten Geschwindigkeitsprofil als Fahrzeugführungsinformation in die Darstellung 1 zu integrieren, indem beispielsweise die Länge der Pfeile 4, 5 oder ihre Dicke entsprechend angepasst wird.

Ferner sei darauf hingewiesen, dass bei der Ermittlung der Befahrbarkeitsbewertung die Einhüllungsfläche des Kraftfahrzeugs nur soweit nötig berücksichtigt wird, beispielsweise also dann, wenn keinerlei Hindernisse vorliegen, die die Außenspiegel des Kraftfahrzeugs gefährden könnten, diese bei der Einhüllungsfläche bzw. Ausdehnung des Kraftfahrzeugs nicht berücksichtigt werden.

Die Darstellung 1 wird vorliegend auf einer Anzeigevorrichtung eines Mensch-Maschine-Interfaces dargestellt.

Fig. 2 zeigt eine Prinzipskizze eines erfindungsgemäßen Kraftfahrzeugs 9. Dieses weist ein zur vollständig automatischen Führung des Kraftfahrzeugs 9 ausgebildetes Fahrzeugsystem 10 mit einem Steuergerät 11 auf. Das Fahrzeugsystem 10 ist dabei vorliegend als ein Einparksystem ausgebildet.

Das Steuergerät 11 ist vorliegend zur Durchführung des erfindungsgemäßen Verfahrens ausgebildet, das bedeutet, es erzeugt Darstellungen wie die Darstellung 1, die einem mit einer Kamera 12 aufgenommenen Kamerabild überlagerte Fahrzeugführungsinformationen zum Betrieb des Fahrzeugsystems 10 zeigen und an einer Anzeigevorrichtung 13, hier dem Display eines Mensch-Maschine-Interface, dargestellt werden können. Neben den Kameras 12 als Umfeldsensoren können selbstverständlich auch weitere Umfeldsensoren vorliegen, die der Einfachheit halber nicht dargestellt sind. Das Steuergerät 11 kann im Übrigen auch zur Erstellung und Aktualisierung des Umfeldmodells ausgebildet sein, hierzu kann jedoch auch ein weiteres Steuergerät verwendet werden. In jedem Fall steuert das Steuergerät 11 auch den gesamten Betrieb des Fahrzeugsystems 10, ermittelt mithin die Zieltrajektorie und die zu deren Realisierung notwendigen Fahreingriffe.

## Patentansprüche

1. Verfahren zum Betrieb eines zur vollständig automatisierten Führung eines Kraftfahrzeugs (9) ausgebildeten Fahrzeugsystems (10), welches unter der Aufsicht eines Fahrers die Längsführung und die Querführung des Kraftfahrzeugs (9) entlang einer Zieltrajektorie, welche aufgrund von zu einem Umfeldmodell ausgewerteten Sensordaten wenigstens eines Umfeldsensors ermittelt wird, vollständig übernimmt, wobei eine den Fahrer bei der Aufsicht unterstützende Darstellung (1) einer den Verlauf der Zieltrajektorie und/oder eine Bewertung wenigstens eines im Umfeldmodell abgedeckten Umfeldbereichs (7, 8) im Hinblick auf dessen Befahrbarkeit beschreibenden Fahrzeugführungsinformation in Relation zu der Umgebung des Kraftfahrzeugs (9) erzeugt und dargestellt wird, wobei ein Geschwindigkeitsprofil dem Verlauf der Zieltrajektorie zugeordnet ist, **dadurch gekennzeichnet, dass** das Geschwindigkeitsprofil ebenso als Fahrzeugführungsinformation angezeigt wird, insbesondere durch eine Modifikation eines den Verlauf der Zieltrajektorie betreffenden Darstellungselements.

2. Verfahren nach Anspruch 1,
**dadurch gekennzeichnet,**
**dass** die Darstellung (1) kontaktanalog auf einem Head-Up-Display angezeigt wird.

3. Verfahren nach Anspruch 1,
**dadurch gekennzeichnet,**
**dass** die Darstellung (1) ein Kamerabild (2) wenigstens eines Teils des Umfelds des Kraftfahrzeugs (9) umfasst, dem die Fahrzeugführungsinformation passgenau überlagert ist.

4. Verfahren nach Anspruch 3,
**dadurch gekennzeichnet,**
**dass** der durch das Kamerabild (2) dargestellte Teil des Umfelds in Abhängigkeit von der Fahrsituation, insbesondere abhängig von dem Verlauf der Zieltrajektorie, zeitaktuell gewählt wird.

5. Verfahren nach einem der vorangehenden Ansprüche,
**dadurch gekennzeichnet,**
**dass** die Fahrzeugführungsinformation so dargestellt wird, als wäre sie auf den Boden des Umfelds projiziert.

6. Verfahren nach Anspruch 5,
**dadurch gekennzeichnet,**
**dass** die Lage des Bodens unter Verwendung von Sensordaten wenigstens eines Umfeldsensors und/oder aus dem Umfeldmodell und/oder aus dem oder wenigstens einem Kamerabild (2) ermittelt wird.

7. Verfahren nach einem der vorangehenden Ansprüche,
**dadurch gekennzeichnet,**
**dass** eine eine Bewertung beschreibende Fahrzeugführungsinformation durch farbige Überlagerung oder Einfärbung des Umfeldbereichs (7, 8) in Abhängigkeit von der Bewertung angezeigt wird.

8. Verfahren nach Anspruch 7,
**dadurch gekennzeichnet,**
**dass** befahrbare Umfeldbereiche (8) in grün und/oder nicht befahrbare Umfeldbereiche (7) in rot markiert werden.

9. Verfahren nach einem der vorangehenden Ansprüche,
**dadurch gekennzeichnet,**
**dass** eine den Verlauf der Zieltrajektorie beschreibende Fahrzeugführungsinformation als wenigstens ein Pfeil (4, 5) und/oder ein die Breite des Kraftfahrzeugs (9) aufweisender Fahrschlauch und/oder in regelmäßigen Abständen aufeinanderfolgende wenigstens teilweise transparente Abbilder des Kraftfahrzeugs (9) und/oder wenigstens eine Linie angezeigt wird.

10. Verfahren nach einem der vorangehenden Ansprüche,
**dadurch gekennzeichnet,**
**dass** ein in dem Verlauf der Zieltrajektorie enthaltener Fahrtrichtungswechsel als Fahrzeugführungsinformation in Form eines Balkens (6) und/oder einer virtuellen Wand angezeigt wird.

11. Verfahren nach einem der vorangehenden Ansprüche,
**dadurch gekennzeichnet,**
**dass** bei der Ermittlung der eine Bewertung wenigstens eines im Umfeldmodell abgedeckten Umfeldbereichs (7, 8) im Hinblick auf dessen Befahrbarkeit beschreibenden Fahrzeugführungsinformation eine Einhüllungsfläche des Kraftfahrzeugs (9) berücksichtigt wird.

12. Verfahren nach Anspruch 11,
**dadurch gekennzeichnet,**
**dass** die Einhüllungsfläche in Abhängigkeit eines erfassten Hindernisses angepasst wird, insbesondere bei einem die Außenspiegel gefährdenden Hindernis eine die Außenspiegel berücksichtigende Einhüllungsfläche und bei einem die Außenspiegel nicht gefährdenden Hindernis eine die Außenspiegel nicht berücksichtigende Einhüllungsfläche verwendet wird.

13. Kraftfahrzeug (9) mit einer Anzeigevorrichtung (13) und einem zur vollständig automatisierten Führung des Kraftfahrzeugs (9) ausgebildeten Fahrzeugsystem (10), aufweisend ein zur Durchführung eines Verfahrens nach einem der vorangehenden Ansprüche ausgebildetes Steuergerät (11).

## Claims

1. Method for operating a vehicle system (10) designed for the completely automated guidance of a vehicle (9), which under the supervision of a driver completely takes over the longitudinal guidance and the transverse guidance of the vehicle (9) along a target trajectory that is determined on the basis of sensor data from at least one environment sensor that are analysed to form an environment model, wherein a representation (1) of vehicle guidance information describing the course of the target trajectory and/or an analysis of at least one environment area (7, 8) covered in the environment model with respect to its navigability in relation to the environment of the vehicle (9) and which assists the driver during the supervision is generated and illustrated,
wherein a velocity profile is associated with the target trajectory, **characterised in that** the velocity profile as well as vehicle guidance information is displayed, in particular by a modification of a representation element relating to the course of the target trajectory.

2. Method according to claim 1,
**characterised in that**
the representation (1) is displayed in a contact analogue way on a head-up display.

3. Method according to claim 1,
**characterised in that**
the representation (1) includes a camera image (2) of at least part of the environment of the vehicle (9), onto which the vehicle guidance information is precisely superimposed.

4. Method according to claim 3,
**characterised in that**
the part of the environment illustrated by the camera image (2) is selected in real time depending of the driving situation, in particular depending on the course of the target trajectory.

5. Method according to one of the preceding claims,
**characterised in that**
the vehicle guidance information is illustrated as if it were projected onto the ground of the environment.

6. Method according to claim 5,
**characterised in that**
the position of the ground is determined using sensor data from at least one environment sensor and/or from the environment model and/or from the at least camera image (2).

7. Method according to one of the preceding claims,
**characterised in that**
vehicle guidance information describing an analysis is displayed by coloured superimposition or colouring of the environment region (7, 8) depending on the analysis.

8. Method according to claim 7,
**characterised in that**
navigable environment regions (8) are marked in green and/or non-navigable environment regions (7) are marked in red.

9. Method according to one of the preceding claims,
**characterised in that**
vehicle guidance information describing the course of the target trajectory is displayed as at least one arrow (4, 5) and/or as a vehicle lane having the width of the vehicle (9) and/or at regular interspacings of successive, at least partially transparent, images of the vehicle (9) and/or in the form of at least one line.

10. Method according to one of the preceding claims,
**characterised in that**
a change of driving direction contained in the course of the target trajectory is displayed as vehicle guidance information in the form of a bar (6) and/or a virtual wall.

11. Method according to one of the preceding claims,
**characterised in that**
an enveloping surface of the vehicle (9) is taken into consideration in the determination of the vehicle guidance information describing an analysis of at least one environment region (7, 8) covered in the environment model with respect to its navigability.

12. Method according to claim 11,
**characterised in that**
the enveloping surface is adapted depending on a detected obstacle, in particular in the case of an obstacle threatening the wing mirrors an enveloping surface is used that takes into account the wing mirrors, and in the case of an obstacle that does not threaten the wing mirrors an enveloping surface is used that disregards the wing mirrors.

13. Vehicle (9) with a display device (13) and a vehicle system (10) designed for the completely automated guidance of the vehicle (9), comprising a control unit (11) designed for carrying out a method according to one of the preceding claims.

## Revendications

1. Procédé de fonctionnement d'un système de véhicule (10) conçu pour la conduite entièrement automatisée d'un véhicule automobile (9), lequel système de véhicule prend entièrement en charge sous la surveillance d'un conducteur le guidage longitudinal et le guidage transversal du véhicule automobile (9) le long d'une trajectoire ciblée, laquelle trajectoire ciblée est déterminée sur la base de données de capteur d'au moins un capteur d'environnement qui sont évaluées en tant que modèle d'environnement,
dans lequel une représentation (1), qui assiste le conducteur lors de la surveillance, d'une information de conduite de véhicule décrivant quant à sa praticabilité l'allure de la trajectoire ciblée et/ou une évaluation d'au moins une zone d'environnement (7, 8) couverte dans le modèle d'environnement est produite et représentée en relation avec l'environnement du véhicule automobile (9) et
dans lequel un profil de vitesse est associé à l'allure de la trajectoire ciblée,
**caractérisé en ce que** le profil de vitesse est également affiché comme information de conduite de véhicule, en particulier grâce à une modification d'un élément de représentation concernant l'allure de la trajectoire ciblée.

2. Procédé selon la revendication 1, **caractérisé en ce que** la représentation (1) est affichée en réalité augmentée sur un dispositif d'affichage tête haute.

3. Procédé selon la revendication 1, **caractérisé en ce que** la représentation (1) comprend une image de caméra (2) d'au moins une partie de l'environnement du véhicule automobile (9) au niveau de laquelle est précisément superposée l'information de conduite de véhicule.

4. Procédé selon la revendication 3, **caractérisé en ce que** la partie de l'environnement qui est représentée par l'image de caméra (2) est choisie instantanément en fonction de la situation de conduite, en particulier en fonction de l'allure de la trajectoire ciblée.

5. Procédé selon l'une des revendications précédentes, **caractérisé en ce que** l'information de conduite de véhicule est représentée comme si elle était projetée sur le sol de l'environnement.

6. Procédé selon la revendication 5, **caractérisé en ce que** la position du sol est déterminée en utilisant des données de capteur d'au moins un capteur d'environnement et/ou à partir du modèle d'environnement et/ou à partir de l'image de caméra (2) ou d'au moins une image de caméra.

7. Procédé selon l'une des revendications précédentes, **caractérisé en ce qu'**une information de conduite de véhicule décrivant une évaluation est affichée via une superposition colorée ou une coloration de la zone d'environnement (7, 8) en fonction de l'évaluation.

8. Procédé selon la revendication 7, **caractérisé en ce que** des zones d'environnement praticables (8) sont marquées en vert et/ou des zones d'environnement non praticables (7) sont marquées en rouge.

9. Procédé selon l'une des revendications précédentes, **caractérisé en ce qu'**une information de conduite de véhicule décrivant l'allure de la trajectoire ciblée est affichée sous la forme d'au moins une flèche (4, 5) et/ou d'un couloir de conduite ayant la largeur du véhicule automobile (9) et/ou de reproductions du véhicule automobile (9) au moins partiellement transparentes qui se succèdent à intervalles réguliers et/ou d'au moins une ligne.

10. Procédé selon l'une des revendications précédentes, **caractérisé en ce qu'**un changement de direction contenu dans l'allure de la trajectoire ciblée est affiché comme information de conduite de véhicule sous la forme d'une barre (6) et/ou d'un mur virtuel.

11. Procédé selon l'une des revendications précédentes, **caractérisé en ce que**, lors de la détermination de l'information de conduite de véhicule décrivant quant à sa praticabilité une évaluation au moins d'une zone d'environnement (7, 8) couverte dans le modèle d'environnement, une surface d'enveloppante du véhicule automobile (9) est prise en compte.

12. Procédé selon la revendication 11, **caractérisé en ce que** la surface d'enveloppante est adaptée en fonction d'un obstacle détecté, en particulier une surface d'enveloppante qui tient compte des rétroviseurs extérieurs étant alors utilisée dans le cas d'un obstacle mettant en danger les rétroviseurs extérieurs et une surface d'enveloppante qui ne tient pas compte des rétroviseurs extérieurs étant alors utilisée dans le cas d'un obstacle ne mettant pas en danger les rétroviseurs extérieurs.

13. Véhicule automobile (9) avec un dispositif d'affichage (13) et avec un système de véhicule (10) conçu pour la conduite entièrement automatisée du véhicule automobile (9), comportant un appareil de commande (11) conçu pour la mise en oeuvre d'un procédé selon l'une des revendications précédentes.
